# EUROPEAN PATENT APPLICATION

(11) **EP 2 267 105 A1**
(43) Date of publication of application: **29.12.2010**
(21) Application number: 09727916.0
(22) Date of filing: 30.03.2009
(51) Int. Cl.: C10L 3/06, C07C 9/04

(54) **PROCESS AND APPARATUS FOR PRODUCING GAS HYDRATE**

(30) Priority: 31.03.2008 JP 2008094130
(71) Applicant: Mitsui Engineering & Shipbuilding Co., Ltd., Chuo-ku Tokyo 104-8439 (JP)
(72) Inventor: MURAYAMA, Tetsuro, Ichihara-shi Chiba 290-8601 (JP); UCHIDA, Kazuo, Tokyo 104-8439 (JP)
(74) Representative: WSL Patentanwälte
(86) International application number: PCT/JP2009/056568
(87) International publication number: WO 2009/123152

(57) **Abstract**

A process is provided which includes: bringing a natural gas, e.g., methane gas or propane gas, or a mixture of these gases into gas-liquid contact with raw-material water to form a gas hydrate; compression-molding the gas hydrate into pellets; and cooling/depressurizing the pellets. Also provided is an apparatus for use in the process. In the cooling/depressurizing step 4, molded gas hydrate masses h3 in a pressurized state are cooled and depressurized to a downstream-side pressure. In the cooling/depressurizing step 4, a receiving chamber 15 which accommodates the gas hydrate masses h3 obtained in the molding step 3 is provided, and the masses h3 are depressurized to the downstream-side pressure while passing through the receiving chamber 15. The masses h3 are introduced into and immersed in a liquid refrigerant r packed in the receiving chamber 15 so that the masses h3 are cooled by solid/liquid contacting with the liquid refrigerant r.

## Description

### TECHNICAL FIELD

The present invention relates to a process including: bringing a natural gas, e.g., methane gas or propane gas, or a mixture of these gases into gas-liquid contact with raw-material water to form a gas hydrate; compression-molding the gas hydrate into pellets; and cooling/depressurizing the pellets. The present invention also relates to an apparatus for use in the process.

### BACKGROUND ART

Among fuel gases, particularly, natural gas (a gas mixture mainly composed of methane gas, propane gas, or the like), when in the form of liquefied natural gas, has a volume reduced down to 1/600th of that in its gaseous state. Accordingly, natural gas is transported in the form of liquefied natural gas (hereinafter, LNG) from a production area to a consumption area or other areas. For the transportation, an LNG carrier is used which is equipped with a tank covered and surrounded by a heat-insulating material.

However, the aforementioned LNG has an extremely low boiling point of -162°C, and has a characteristic that the LNG rapidly evaporates as the temperature rises. Thus, it is necessary to keep LNG under the extremely low temperature condition during transportation. There is therefore required a certain power for operating a freezer to keep LNG under such condition.

In these days, as a form of fuel gas, attention has been focused on a so-called gas hydrate that can be transported stably at a milder cooling temperature than that for LNG described above. The gas hydrate is formed as follows. Specifically, hydration reaction is carried out by bringing raw-material gas such as a natural gas and raw-material water into gas-liquid contact at a temperature of approximately 0 to 5°C under an atmosphere at a high pressure of approximately 3 to 5 MPa. In the gas hydrate, molecules of the natural gas or the like are trapped in a lattice formed of aggregated multiple water molecules.

Such gas hydrate has a so-called "self-preservation effect" by which the decomposition is suppressed as follows. Specifically, water constituting the lattice is frozen by a latent heat generated when the gas hydrate is thawed and decomposed. The surface of the gas hydrate is enclosed by the ice coating. Because of this self-preservation effect, the gas hydrate has a superb characteristic that the gas hydrate can be stored or transported over an extended period under atmospheric pressure at approximately -20°C to -10°C, which is a far milder atmosphere than that for LNG.

Furthermore, for example, natural gas hydrate (hereinafter, NGH), when in the form of NGH, has a volume approximately 1/170th of that in its gaseous form. Although having a volume reduction ratio smaller than that of LNG, NGH does not require inputting of such freezing energy as described above, which is needed to keep LNG at such an extremely low temperature of -162°C. Moreover, NGH can be stored or transported stably over an extended period under atmospheric pressure. Thus, studies have been conducted on storing and transporting natural gases in the form of NGH.

Meanwhile, natural gas in the form of NGH is a powder snow-like particle, and the mass (bulk density) of NGH per unit volume is low. Accordingly, there is a problem that, when NGH is filled into a storage container, transportation container, or the like, the filled amount is small. Moreover, because NGH is in the form of a powder snow-like particle, the specific surface area of the particle per unit weight is large. Accordingly, there is a problem that the decomposition stability is slightly lowered.

Furthermore, a powder snow-like NGH is a fine particle, and accordingly has a problem of a poor handling property in carrying, storing, and unloading, for example.

In order to solve such problems, proposed is that powder snow-like NGH particles are compression-molded with a roll-type pelletizer into pellets (see, for example, Patent Document 1).
Patent Document 1 : Japanese patent application *Kokai* publication No. 2006-104256

### DISCLOSURE OF THE INVENTION

### PROBLEMS TO BE SOLVED BY THE INVENTION

In Patent Document 1 mentioned above, a gas hydrate is compressed with a granulator under a generating atmosphere (5 MPa, approximately 4°C) to form pellets, and the pellets are cooled down to approximately -20°C with a cooler. The cooled pellets are accommodated in a lock hopper-type depressurizing device to depressurize the pellets from the aforementioned pressure to atmospheric pressure. Then, the depressurized pellets are introduced into a storage tank.

In this manner, according to Patent Document 1, a gas hydrate is pelletized to decrease the specific surface area and to increase the bulk density. Accordingly, the decomposition resistance is improved and the handling property is also improved.

However, when depressurizing pellets from a high pressure at the cooler side to atmospheric pressure at a downstream side where the storage tank or the like is located, the depressurizing device (lock hopper) discharges a raw-material gas such as a natural gas introduced into the lock hopper together with the pellets. Moreover, since the discharged raw-material gas is returned to a gas hydrate generator to be reused, the raw-material gas has to be compressed to the generating pressure with a compressor. This compressor is a compressor for compressing gas to increase a pressure to a certain high pressure, and requires quite an amount of power for the operation power. For example, provided that a treated amount of the raw-material gas discharged and depressurized approximately to atmospheric pressure is 10 kg/sec, a power Ls for compressing gas by the compressor is as large as approximately 211 kW. Meanwhile, the amount of heat necessary for cooling is 87.5 kJ per kg. Since the treated amount is 10 kg/sec, the power Ls is 875 kW. Provided that the COP as the power of the freezer is 3, a freezing power L_{SA} is 292 kW.

Accordingly, the lock hopper-type depressurizing device as described above requires an enormous power L_{R2} for cooling and depressurizing, which is 503 kW (211 kW + 292 kW). Additionally, the pressure has to be increased from atmospheric pressure (0.105 MPa) to the generating pressure (approximately 5.5 MPa), and the compression ratio is as large as 55.

Meanwhile, in a cooling/depressurizing method, a cooling gas (gaseous refrigerant, such for example as natural gas) which is cooled to approximately -50 to -20°C is directly blown into a depressurizing device (lock hopper) to cool pellets, and the pellets thus cooled are depressurized after the cooling gas is discharged. Such a cooling/depressurizing method has a problem as described above that the cooling gas has to be collected and pressurized to the generating pressure with a compressor. The cooling gas such as natural gas has a low specific heat as well as a low heat capacity, and cannot cool the pellets efficiently. Furthermore, there is another problem that a large amount of cooling energy is required to cool a gas having a low specific heat.

### MEANS FOR SOLVING THE PROBLEMS

A process for producing a gas hydrate according to the present invention is designed as follows.

1) The process is characterized by comprising a cooling/depressurizing step of cooling a molded gas hydrate mass in a pressurized state and depressurizing the molded gas hydrate mass to a downstream-side pressure. The process is characterized in that: in the cooling/depressurizing step, a receiving chamber which accommodates the gas hydrate mass is provided, and the mass is depressurized to the downstream-side pressure while passing through the receiving chamber; and the mass is immersed in a liquid refrigerant packed in the receiving chamber, so that the mass is cooled by solid/liquid contacting with the liquid refrigerant.

2) The process is characterized by comprising: a cooling/depressurizing step of cooling a molded gas hydrate mass in a pressurized state and depressurizing the molded gas hydrate mass to a downstream-side pressure; and a solid/liquid separating step of separating a refrigerant from the gas hydrate mass, the refrigerant accompanying the gas hydrate mass cooled and depressurized in the cooling/depressurizing step. The process is characterized in that: in the cooling/depressurizing step, a receiving chamber which accommodates the gas hydrate mass obtained in the molding step is provided, the mass is depressurized to the downstream-side pressure while passing through the receiving chamber, and the mass is immersed in a liquid refrigerant packed in the receiving chamber, so that the mass is cooled by solid/liquid contacting with the liquid refrigerant; and in the solid/liquid separating step, the cooled and depressurized gas hydrate mass is separated from the liquid refrigerant, and the gas hydrate mass is cooled by evaporation heat generated when the liquid refrigerant still attached to the gas hydrate mass evaporates.

In addition, an apparatus for producing a gas hydrate according to the present invention is configured as follows.

3) The apparatus is characterized by comprising a cooling/depressurizing device for cooling a molded gas hydrate mass in a pressurized state and depressurizing the molded gas hydrate mass to a downstream-side pressure. The apparatus is characterized in that: the cooling/depressurizing device includes an introduction port for the gas hydrate mass, a supply port for a liquid refrigerant, a discharge port for discharging the gas hydrate mass together with the refrigerant, and a receiving chamber formed to be communicatable with any of the introduction port, the refrigerant supply port, and the discharge port; the liquid refrigerant at any one of a pressure on a molding device side and an approximate pressure thereto is supplied and packed into the receiving chamber from the refrigerant supply port; the gas hydrate mass is immersed through the introduction port in the liquid refrigerant in the receiving chamber; and the liquid refrigerant and the gas hydrate mass are discharged from the discharge port communicating with the downstream-side pressure.

4) The apparatus is characterized by comprising: a cooling/depressurizing device for cooling a molded gas hydrate mass in a pressurized state and depressurizing the molded gas hydrate mass to a downstream-side pressure; and a solid/liquid separating device for separating a refrigerant from the gas hydrate mass, the refrigerant accompanying the gas hydrate mass cooled and depressurized by the cooling/depressurizing device. The apparatus characterized in that: the cooling/depressurizing device includes an introduction port for the gas hydrate mass, a supply port for a liquid refrigerant, a discharge port for discharging the gas hydrate mass together with the refrigerant, and a receiving chamber formed to be communicatable with any of the introduction port, the refrigerant supply port, and the discharge port; in the cooling/depressurizing device, the liquid refrigerant at any one of a pressure on a molding device side and an approximate pressure thereto is supplied and packed into the receiving chamber from the refrigerant supply port, the gas hydrate mass is immersed through the introduction port in the liquid refrigerant in the receiving chamber, and the liquid refrigerant and the gas hydrate mass are discharged from the discharge port communicating with the downstream-side pressure; and, in the solid/liquid separating device, a liquid separating chamber is formed to separate the gas hydrate mass and the liquid refrigerant which are discharged from the cooling/depressurizing device, and to evaporate the liquid refrigerant still attached to the gas hydrate mass.

### EFFECTS OF THE INVENTION

1) In the cooling/depressurizing step of cooling a gas hydrate mass (pellet) and depressurizing the pellet to a downstream-side pressure, the receiving chamber which accommodates the pellet is provided, and the pellet is depressurized to the downstream-side pressure while passing through the receiving chamber. The pellet is introduced into and immersed in a liquid refrigerant packed in the receiving chamber so that the pellet is cooled by solid/liquid contacting with the liquid refrigerant. Accordingly, a cooling gas is not discharged at the time of depressurization unlike the case of the conventional technique. Thus, no power is required for compressing a cooling gas.
Moreover, unlike a conventionally-used cooling gas, the liquid refrigerant is incompressible, and accordingly does not have to be compressed from an atmospheric pressure state to a high pressure state. Thus, no compression power is required therefor. Furthermore, the liquid refrigerant has a higher specific heat and a higher heat capacity than the cooling gas. This allows cooling of the pellet without supplying a large amount of the refrigerant. Thus, the receiving chamber can be made compact, allowing the miniaturization of the apparatus.

2) A pellet is brought into solid/liquid contact with a liquid refrigerant so that the pellet is cooled. The cooled pellet and the liquid refrigerant are discharged and depressurized. The pellet is separated from the liquid refrigerant, and the pellet is cooled by evaporation heat generated when the liquid refrigerant still attached to the pellet is volatilized. Accordingly, no power is required for compressing a cooling gas. Moreover, the pellet is cooled by the evaporation heat of the liquid refrigerant. Accordingly, the temperature of the liquid refrigerant packed in the receiving chamber does not have to be an extremely low temperature. Thus, the power for cooling the liquid refrigerant is reduced.

### BRIEF DESCRIPTION OF THE DRAWINGS

[Fig. 1] Fig. 1 shows a schematic configuration diagram of an apparatus for producing a gas hydrate according to the present invention.
[Fig. 2] Fig. 2 shows views for explaining the operations of a cooling/depressurizing device in the apparatus for producing a gas hydrate according to the present invention.

### EXPLANATION OF REFERENCE NUMERALS

- B: blower
- P2: slurry pump
- P3: pump
- P5, P6: liquid refrigerant pump
- h1: gas hydrate slurry
- h2: dewatered gas hydrate
- h3: gas hydrate pellets
- g1: raw-material gas
- g2: collected gas
- w1: raw-material water
- w2: drained water
- w3: squeezed water
- L1: raw-material gas supply pipe
- L2: raw-material water supply pipe
- L3: gas circulating pipe
- L4: slurry transporting pipe
- L5: drained water reflux pipe
- L6: hydrate transporting pipe
- L7: pellet supply pipe
- L8: pellet transporting pipe
- L9: squeezed-water reflux pipe
- L10: liquid-refrigerant supply pipe
- L11: liquid-refrigerant packing/pressurizing pipe
- L12: liquid-refrigerant circulating pipe
- L15: refrigerant reflux pipe
- L16: gas collecting pipe
- L18: reliquefied refrigerant pipe
- L20: collecting gas pipe
- 1: generating device
- 1A: pressure-tight container
- 1B: stirring blade
- 1C: sparger
- 2: dewatering device
- 2A: main body
- 2B: dewatering chamber
- 2C: screw conveyor
- 3: molding device
- 3A: receiving chamber
- 3B: roll
- 3C: push-in unit
- 4: cooling/depressurizing device
- 4A: receiving tank part
- 4B: cooling/depressurizing part
- 4C: feeding-out part
- 5: solid/liquid separating device
- 5A: container
- 5B: solid/liquid separating element
- 5C: liquid refrigerant collecting part
- 5D: gas collecting part
- 5E: pellet feeding-out part
- 6: reservoir
- 11: supply port
- 12: feeding-out part
- 15: receiving chamber
- 15a: rotary element
- 21: compressor
- 22: reserve tank
- 23: refrigerant tank
- 25: condenser
- N: nozzle
- F1, F2: liquid surface sensor
- T: pressure gauge
- v1, v2, v3: valve
- r: liquid refrigerant
- r1: reliquefied refrigerant

### BEST MODES FOR CARRYING OUT THE INVENTION

Hereinafter, an apparatus for producing a gas hydrate according to the present invention will be described with an illustration thereof.

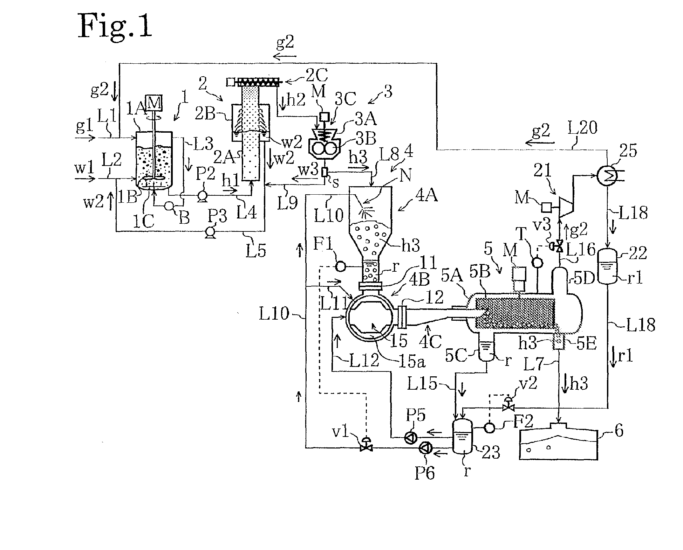

As shown in Fig. 1, the apparatus for producing a gas hydrate according to the present invention includes: a generating device 1 for generating a gas hydrate h by subjecting a raw-material gas g1 and raw-material water w1 to a hydration reaction; a dewatering device 2 for discharging water from a gas hydrate slurry h1 containing the gas hydrate h generated by the generating device 1; and a molding device 3 for forming pellets h3 by compressing a gas hydrate h2 dewatered by the dewatering device 2.

The generating device 1 includes: a pressure-tight container 1A connected to a supply pipe L1 for the raw-material gas g1 and to a supply pipe L2 for the raw-material water w1; and a stirring blade 1B for stirring an aqueous solution in the container 1A. A bottom portion of the pressure-tight container 1A is provided with a sparger 1C for jetting the raw-material gas g1 into the aqueous solution. Moreover, a blower B is provided to supply the raw-material gas g1 to the sparger 1C, and to thereby blow the raw-material gas g1 into the raw-material water w1.

The dewatering device 2 includes: a vertical-type cylindrical main body 2A into which the gas hydrate slurry h1 containing the gas hydrate h generated in the generating device 1; a dewatering chamber 2B in a middle portion of the main body 2A; and a screw conveyor 2C on a top portion of the main body 2A. The dewatering chamber 2B is formed into a cylindrical shape along an outer wall of the cylindrical main body 2A. A number of drain holes are formed in the dewatering chamber 2B, communicating with an inner surface and an outer surface of the cylindrical main body 2A. Moreover, a lower portion of the dewatering chamber 2B is provided with a pipe line L5 for returning, to the generating device 1, water w2 separated and discharged from the gas hydrate.

The molding device 3 includes: a funnel-shape receiving chamber 3A for receiving the gas hydrate h2 dewatered in the dewatering device 2; and a pair of rolls 3B disposed below the receiving chamber 3A. The receiving chamber 3A is provided with a push-in unit 3C including a screw for pushing and supplying, toward the rolls 3B, the gas hydrate h2 that is supplied to the receiving chamber 3A.

In the surfaces of the rolls 3B, multiple recessed portions for molding are formed along the circumference of the roll surfaces. The rolls 3B are configured to form the pellets h3 by pressing and compacting the gas hydrate h2 packed in the recessed portions for molding.

The pellets h3 compacted in the molding device 3 are supplied to a hopper-shaped receiving tank part 4A of a cooling/depressurizing device 4 through a pipe L8. A liquid refrigerant r is supplied to the receiving tank part 4A through a nozzle N which is adjusted with a liquid surface sensor F1 in a way that the liquid refrigerant r is pooled in a lower portion of the receiving tank part 4A.

As the liquid refrigerant r supplied to the receiving tank part 4A, a liquefied propane gas is preferably used in this embodiment. The liquefied propane gas (hereinafter, LPG) is pooled in a refrigerant tank 23, and cooled to approximately -40 under atmospheric pressure. The LPG liquid refrigerant r is pressure-transferred with a pump P6 from the refrigerant tank 23 through a pipe L10, and supplied to the receiving tank part 4A.

A lower portion of the receiving tank part 4A is provided with a cooling/depressurizing part 4B including a pellet introduction port 11 which communicates with the receiving tank part 4A. Inside the cooling/depressurizing part 4B, a barrel-shaped rotary element 15a is provided. The rotary element 15a has openings in an upper portion and a lower portion thereof, forming a receiving chamber 15 into which the pellets h3 are introduced. Moreover, at a side of the cooling/depressurizing part 4B, a feeding-out part 4C for discharging the pellets h3 is provided and communicates with the cooling/depressurizing part 4B. The cooling/depressurizing part 4B and the feeding-out part 4C are connected to each other with a feeding-out port 12.

In addition, the cooling/depressurizing part 4B is connected to a circulating pipe L12 for the liquid refrigerant r at the opposite position to the feeding-out port 12. Furthermore, the cooling/depressurizing part 4B is connected to a pipe L11 for packing and pressuring the liquid refrigerant r at a position between the pellet supply port 11 and the jetting pipe L12.

The pellets h3 cooled and depressurized by the cooling/depressurizing device 4 are supplied to a solid/liquid separating device 5 that includes a cylindrical solid/liquid separating element 5B. The liquid refrigerant r discharged from opening hole portions of the separating element 5B flows down into a liquid-refrigerant collecting part 5C provided to a lower portion of the solid/liquid separating device 5. Meanwhile, the pellets h3 move forward with the rotation of the solid/liquid separating element 5B and are fed out from a pellet feeding-out part 5E provided in front of the separating element 5B.

Moreover, since the solid/liquid separating device 5 is approximately at atmospheric pressure, part of the LPG attached to the pellets h3 evaporates. For this reason, a gas collecting pipe L16 for collecting the propane gas is connected to a collecting part 5D. The gas collecting pipe L16 is provided with a valve v3 so as to control opening and closing of the gas collecting pipe L16 based on a signal from a pressure sensor T that measures the pressure inside the solid/liquid separating device 5.

The gas collecting pipe L16 is provided with a compressor 21. The compressor 21 pressurizes the propane gas to approximately 1 MPa to 1.5 MPa, and the propane gas is condensed with a condenser 25. The propane gas serves as a reliquefied refrigerant r1 and collected into a reserve tank 22. Meanwhile, a collected gas g2 that does not serve as the reliquefied refrigerant r1 after the condensation may be mixed with the raw-material gas g1 in the generating device 1 for reuse.

The reliquefied refrigerant r1 in the reserve tank 22 is returned to the refrigerant tank 23 via a valve v2. In addition, the refrigerant r collected in the liquid-refrigerant collecting part 5D is also returned to the tank 23.

The pellets h3 from which the liquid refrigerant r is separated by the solid/liquid separating device 5 and which are fed out from the solid/liquid separating device 5 have been further cooled by the evaporation heat due to the volatilization of the liquid refrigerant r. The pellets h3 are transferred and stored into a reservoir 6 through a pipe L7, a belt conveyor, or the like, or carried with a gas hydrate transporting carrier or the like.

### (Production of gas hydrate)

Next, described will be production of a gas hydrate with the thus-structured apparatus for producing a gas hydrate according to the present invention.

As shown in Fig. 1, the raw-material gas g1 and the raw-material water w1 are supplied into the reaction container 1A of the generating device 1. The temperature in the reaction container 1A is retained at 2°C to 7°C, and the pressure therein is retained at approximately 5 MPa. As the raw-material gas g1, a natural gas mainly composed of methane gas is used in this embodiment.

The natural gas g1 (raw-material gas) supplied into the reaction container 1A is supplied into the raw-material water w1 in the form of fine bubbles by the sparger 1C (aeration unit) . The raw-material water w1 is stirred with the stirrer 1B, promoting the gas-liquid contacting between the natural gas g1 and the raw-material water w1. By this gas-liquid contacting, hydration reaction takes place to form a gas hydrate. The gas hydrate h is stirred and bubbled to be diffused and dispersed into the raw-material water w1, and thus the gas hydrate slurry h1 is formed. The hydration reaction is continued until the gas hydrate percentage in the gas hydrate slurry h1 reaches, for example, approximately 10 to 20%.

The gas hydrate slurry h1 having a predetermined concentration is pressure-transferred with a pump P1 through a transporting pipe L4, and supplied to a lower portion of the cylindrical main body 2A of the dewatering device 2. The slurry h1 introduced in the cylindrical main body 2A is drained into the dewatering chamber 2B through the drain holes provided in a middle of the cylindrical main body 2A when the slurry h1 is moved upward within the main body 2A. The water w2 drained into the dewatering chamber 2B returns to the generating device 1 through the drain pipe L5.

The gas hydrate thus concentrated by draining the water via the dewatering chamber 2B is moved above the cylindrical main body 2A where the content of the gas hydrate is increased to, for example, approximately 40 to 60%. This dewatered gas hydrate h2 is transferred to the molding device 3 with the screw conveyor 2C provided on the top portion of the cylindrical main body 2A.

The gas hydrate h2 transferred into the receiving chamber 3A of the molding device 3 is pushed downward into a lower portion of the receiving chamber 3A with the screw-type push-in unit 3C, and the gas hydrate h2 is supplied onto the rolls 3B disposed below the receiving chamber 3A in a way to be pushed against the rolls 3B. The gas hydrate h2 pushed against the rolls 3B is packed into the recessed portions for molding (dimples) formed in the surfaces of the rolls 3B. The gas hydrate h2 is trapped in and pressed against the recessed portions for molding as the pair of rolls 3B rotate. Thus, the pellets h3 are formed.

When the gas hydrate h2 is pressed and compacted, the gas hydrate h2 is squeezed, and water w3 is discharged. The gas hydrate percentage of the gas hydrate pellets h3 is, for example, 90% or more.

The pellets h3 molded by the molding device 3 and having an increased gas hydrate percentage is transferred to the depressurizing/cooling device 4 via a separator S that separates the pellets h3 and the discharged water w3 from each other. Meanwhile, the discharged water w3 is returned toward the generating device 1. When being supplied into the receiving tank part 4A of the depressurizing/cooling device 4, the pellets h3 are transferred to the receiving tank part 4A so that the pellets h3 can be loaded into the cooling/depressurizing part 4B at the lower portion of the receiving tank part 4A.

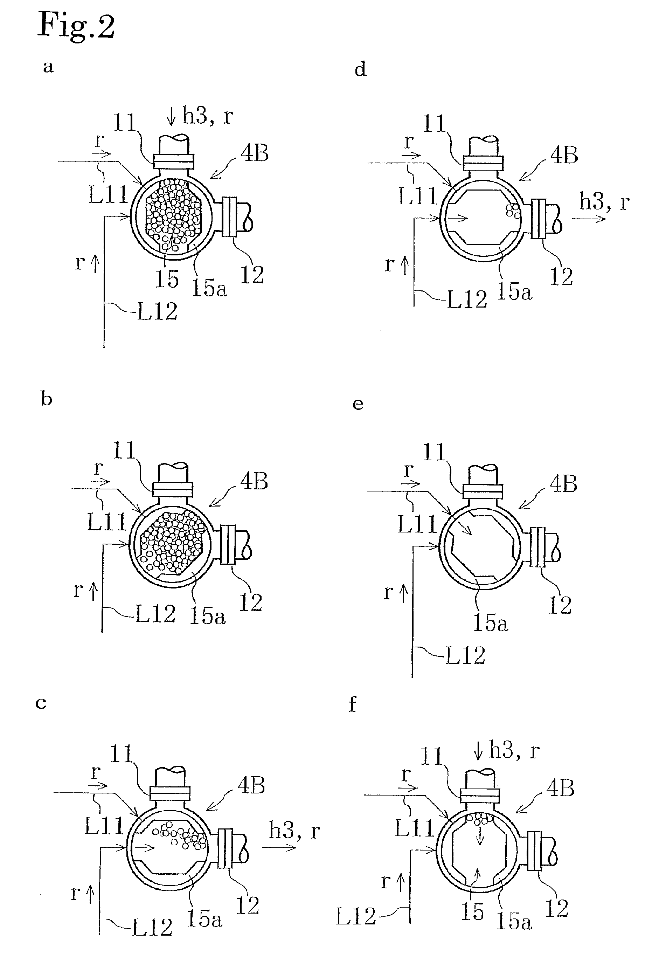

Next, the operations of the cooling/depressurizing part 4B will be described with reference to Fig. 2. First, as shown in Fig. 2a, an opening of the rotary element 15a forming the receiving chamber 15 communicates with the introduction port 11. Then, the pellets h3 sink by their own weight and are packed into the receiving chamber 15. At this point, an LPG which is pressurized to a pressure equivalent to that on the molding device 3 side is pre-packed in the receiving chamber 15. Accordingly, when the opening communicates with the introduction port 11, the pellets h3 sink into the receiving chamber 15 due to the difference in specific gravity from the LPG. Moreover, the LPG is filled up to a certain liquid surface level in the lower portion of the receiving tank part 4A. Accordingly, when the receiving chamber 15 communicates with the introduction port 11, the LPG prevents a gas (raw-material gas) on the molding device 3 side from entering the receiving chamber 15 together with the pellets h3.

When the rotary element 15a of the receiving chamber 15 rotates clockwise as shown in Fig. 2b, the opening of the receiving chamber 15 is closed, and the pellets h3 and the LNG are hermetically sealed while held at the high pressure on the molding device 3 side.

The rotary element 15a in the hermetically sealed state with the high pressure further rotates clockwise, so that, as shown in Fig. 2C, the receiving chamber 15 communicates with the feeding-out port 12 communicating with atmospheric pressure on the solid/liquid separating device 5 side. When the receiving chamber 15 communicates with the feeding-out port, the inside of the receiving chamber 15 is depressurized down to atmospheric pressure. Moreover, as shown in Figs. 2c and d, an LPG is introduced through the liquid-refrigerant circulating pipe L12 provided in rear of the receiving chamber 15, and the pellets h3 are pushed to flow into the feeding-out part 4C. The pellets h3 thus pushed to flow are transferred into the solid/liquid separating device 5 through the feeding-out part 4C.

The rotary element 15a forming the receiving chamber 15 further rotates clockwise, so that the opening of the receiving chamber 15 is closed again to be in the hermetically sealed state. In this hermetically sealed state, as shown in Fig. 2e, an LNG is supplied into the receiving chamber 15 through the liquid-refrigerant packing/pressurizing pipe L11, so that the receiving chamber 15 is pressurized up to the pressure on the molding device 3 side.

The rotary element 15a further rotates clockwise, so that the opening of the rotary element 15a communicates with the introduction port 11 as shown in Fig. 2f. Together with the communicating, the pellets h3 are packed into the receiving chamber 15 as shown in Fig. 2a. By repeating such operations, the pellets h3 are continuously cooled and depressurized.

The pellets h3 and the LPG supplied to the solid/liquid separating device 5 from the feeding-out part 4C are fed out into the cylindrical separating unit 5B. The LPG is discharged from the multiple opening holes formed in the separating unit 5B to the lower portion thereof, whereas the pellets h3 remains on the separating unit 5B. Furthermore, the LPG still attached to the pellets h3 remaining on the separating unit 5B volatilizes, and the evaporation heat due to the volatilization cools the pellets h3.

The cylindrical separating unit 5B is configured to rotate with a motor. With this rotation, the pellets h3 are transferred forward. The pellets h3 transferred forward within the separating unit 5B fall from an end portion of the separating unit 5B, and are fed out from the pellet feeding-out part 5E provided to a lower portion of the solid/liquid separating device 5. The pellets h3 are supplied to the reservoir 6 through the pipe L7.

The propane gas g2 volatilized in the solid/liquid separating device 5 is pressurized from atmospheric pressure to approximately 1.12 MPa with the compressor 21 for cooler after passing through the gas collecting pipe L16. Then, the propane gas g2 is condensed with the condenser 25 to form the reliquefied refrigerant r1. The reliquefied refrigerant r1 is collected into the reserve tank 22, and then returned to the refrigerant tank 23.

In the present invention, provided that the treated amount is 10 kg/sec, the amount of heat necessary for cooling is 875 kW. Provided that the COP as the power for the freezer is 3, the L_{SA} is 292 kW. In the present invention, it is not necessary to install a compressor dedicated to compress gas, and the heat source device for cooler can be utilized. Accordingly, not much compression power is required. Thus, the power necessary for cooling/depressurizing is only a driving force (approximately 3 kW) for a valve and the cooling power, which is approximately 295 kW (292 kW + 3 kW).

According to the present invention, the compression ratio of the collected gas can be reduced to approximately 1/10th of that required in the conventional technique. Additionally, the power for cooling/depressurizing can be reduced to approximately half of that required in the conventional technique.

## Claims

1. A process for producing a gas hydrate **characterized by** comprising:
a cooling/depressurizing step of cooling a molded gas hydrate mass in a pressurized state and depressurizing the molded gas hydrate mass to a downstream-side pressure, the process **characterized in that**
in the cooling/depressurizing step, a receiving chamber which accommodates the gas hydrate mass is provided, and the mass is depressurized to the downstream-side pressure while passing through the receiving chamber, and
the mass is immersed in a liquid refrigerant packed in the receiving chamber, so that the mass is cooled by solid/liquid contacting with the liquid refrigerant.

2. A process for producing a gas hydrate **characterized by** comprising:
a cooling/depressurizing step of cooling a molded gas hydrate mass in a pressurized state and depressurizing the molded gas hydrate mass to a downstream-side pressure; and
a solid/liquid separating step of separating a refrigerant from the gas hydrate mass, the refrigerant accompanying the gas hydrate mass cooled and depressurized in the cooling/depressurizing step,
the process **characterized in that**
in the cooling/depressurizing step, a receiving chamber which accommodates the gas hydrate mass obtained in the molding step is provided, the mass is depressurized to the downstream-side pressure while passing through the receiving chamber, and the mass is immersed in a liquid refrigerant packed in the receiving chamber, so that the mass is cooled by solid/liquid contacting with the liquid refrigerant, and
in the solid/liquid separating step, the cooled and depressurized gas hydrate mass is separated from the liquid refrigerant, and the gas hydrate mass is cooled by evaporation heat generated when the liquid refrigerant still attached to the gas hydrate mass evaporates.

3. An apparatus for producing a gas hydrate **characterized by** comprising:
a cooling/depressurizing device for cooling a molded gas hydrate mass in a pressurized state and depressurizing the molded gas hydrate mass to a downstream-side pressure, the apparatus **characterized in that**
the cooling/depressurizing device includes:
an introduction port for the gas hydrate mass;
a supply port for a liquid refrigerant;
a discharge port for discharging the gas hydrate mass together with the refrigerant; and
a receiving chamber formed to be communicatable with any of the introduction port, the refrigerant supply port, and the discharge port,
the liquid refrigerant at any one of a pressure on a molding device side and an approximate pressure thereto is supplied and packed into the receiving chamber from the refrigerant supply port,
the gas hydrate mass is immersed through the introduction port in the liquid refrigerant in the receiving chamber, and
the liquid refrigerant and the gas hydrate mass are discharged from the discharge port communicating with the downstream-side pressure.

4. An apparatus for producing a gas hydrate **characterized by** comprising:
a cooling/depressurizing device for cooling a molded gas hydrate mass in a pressurized state and depressurizing the molded gas hydrate mass to a downstream-side pressure; and
a solid/liquid separating device for separating a refrigerant from the gas hydrate mass, the refrigerant accompanying the gas hydrate mass cooled and depressurized by the cooling/depressurizing device,
the apparatus **characterized in that**
the cooling/depressurizing device includes:
an introduction port for the gas hydrate mass;
a supply port for a liquid refrigerant;
a discharge port for discharging the gas hydrate mass together with the refrigerant; and
a receiving chamber formed to be communicatable with any of the introduction port, the refrigerant supply port, and the discharge port, in which
the liquid refrigerant at any one of a pressure on a molding device side and an approximate pressure thereto is supplied and packed into the receiving chamber from the refrigerant supply port,
the gas hydrate mass is immersed through the introduction port in the liquid refrigerant in the receiving chamber, and
the liquid refrigerant and the gas hydrate mass are discharged from the discharge port communicating with the downstream-side pressure, and
in the solid/liquid separating device, a liquid separating chamber is formed to separate the gas hydrate mass and the liquid refrigerant which are discharged from the cooling/depressurizing device, and to evaporate the liquid refrigerant still attached to the gas hydrate mass.
